# EUROPEAN PATENT APPLICATION

(11) **EP 4 607 894 A1**
(43) Date of publication of application: **27.08.2025**
(21) Application number: 23894905.1
(22) Date of filing: 14.11.2023
(51) Int. Cl.: H04L 67/125, H04L 67/131, G06F 3/04817, G06Q 30/06, G16Y 10/80, G16Y 20/20

(54) **ELECTRONIC DEVICE AND METHOD FOR PROVIDING VIRTUAL IOT ENVIRONMENT**

(30) Priority: 21.11.2022 KR 20220156704; 08.12.2022 KR 20220170915
(71) Applicant: Samsung Electronics Co., Ltd., Suwon-si, Gyeonggi-do 16677 (KR)
(72) Inventor: KIM, Kyoungae, Suwon-si, Gyeonggi-do 16677 (KR); HUH, Eunjung, Suwon-si, Gyeonggi-do 16677 (KR); KANG, Doosuk, Suwon-si, Gyeonggi-do 16677 (KR)
(74) Representative: HGF
(86) International application number: PCT/KR2023/018243
(87) International publication number: WO 2024/111976

(57) **Abstract**

An electronic device according to various embodiments of the present document may comprise a display, a camera, a memory for storing instructions, and a processor operatively connected to the display, the camera, and the memory. The instructions stored in the memory may cause, when executed by the processor, the electronic device to: activate the camera and display, on the display, an image acquired in real time through the camera; analyze the image to determine at least one space in the image; identify at least one Internet of things (IoT) device which may be placed in the at least one space; and display at least one virtual IoT device corresponding to the identified at least one IoT device in the determined at least one space of the image. Various other embodiments are possible.

## Description

### [Technical Field]

The disclosure relates to an electronic device and, more specifically, to a method for providing a virtual IoT environment on an electronic device.

### [Background Art]

The Internet of Things (IoT) may be a technology in which various objects are equipped with computing and communication functions, enabling access through the Internet. For example, home appliances such as TVs, refrigerators, washing machines, and vacuum cleaners, various sensors such as temperature sensors and motion sensors, or general devices such as lights and curtains may be utilized as IoT devices. Users may remotely control IoT devices using electronic devices (e.g., smartphones, tablet PCs, and laptop PCs) that support wireless communication functions.

As IoT technology advances, a large number of IoT devices may be placed in a specific space such as a home, and users may demand additional IoT devices to be utilized in addition to the IoT devices currently in use.

### [Disclosure of Invention]

### [Technical Problem]

In the past, there was no technology for recommending IoT devices that can be disposed to enable users to construct an IoT environment in a specific space.

### [Solution to Problem]

An electronic device according to the disclosure (or specification or invention) may include a display, a camera, a memory storing instructions, and a processor operatively connected to the display, the camera, and the memory.

According to an embodiment, the instructions stored in the memory, when executed by the processor, may cause the electronic device to activate the camera and display an image acquired in real time through the camera on the display, analyze the image to determine at least one space within the image, identify at least one IoT (Internet of Things) device capable of being disposed in the at least one space, and display at least one virtual IoT device corresponding to the at least one identified IoT device on the at least one determined space of the image.

A method for providing a virtual IoT environment of an electronic device according to various embodiments of the disclosure may include activating a camera to display an image acquired in real time through the camera, analyzing the image to determine at least one space within the image, identifying at least one IoT (Internet of Things) device capable of being disposed in the at least one space, and displaying at least one virtual IoT device corresponding to the at least one identified IoT device on the at least one determined space of the image.

### [Advantageous Effects of Invention]

According to various embodiments of the disclosure, it is possible to provide an electronic device capable of recognizing space and providing a virtual IoT device to a user, and a method for providing a virtual IoT environment of the electronic device.

### [Brief Description of Drawings]

FIG. 1 is a block diagram of an electronic device in a network environment according to various embodiments.
FIG. 2 is a block diagram of an electronic device according to various embodiments.
FIG. 3 is a flowchart illustrating a method for providing a virtual IoT environment of an electronic device according to various embodiments.
FIG. 4 is a flowchart illustrating a method for an electronic device to recognize a real object according to various embodiments.
FIG. 5A and FIG. 5B illustrate real IoT devices recognized from a camera image according to various embodiments.
FIG. 6A and FIG. 6B illustrate virtual IoT devices capable of being disposed in a camera image according to various embodiments.
FIG. 7 illustrates a camera image and a control item for controlling an IoT device according to various embodiments.
FIG. 8 illustrates a camera image and an affordance item for a virtual IoT device according to various embodiments.
FIG. 9 illustrates a change in a camera image and a control item depending on a change in a camera viewpoint according to various embodiments.
FIG. 10 illustrates an example of recommending a virtual IoT device depending on a real environment according to various embodiments.

### [Mode for the Invention]

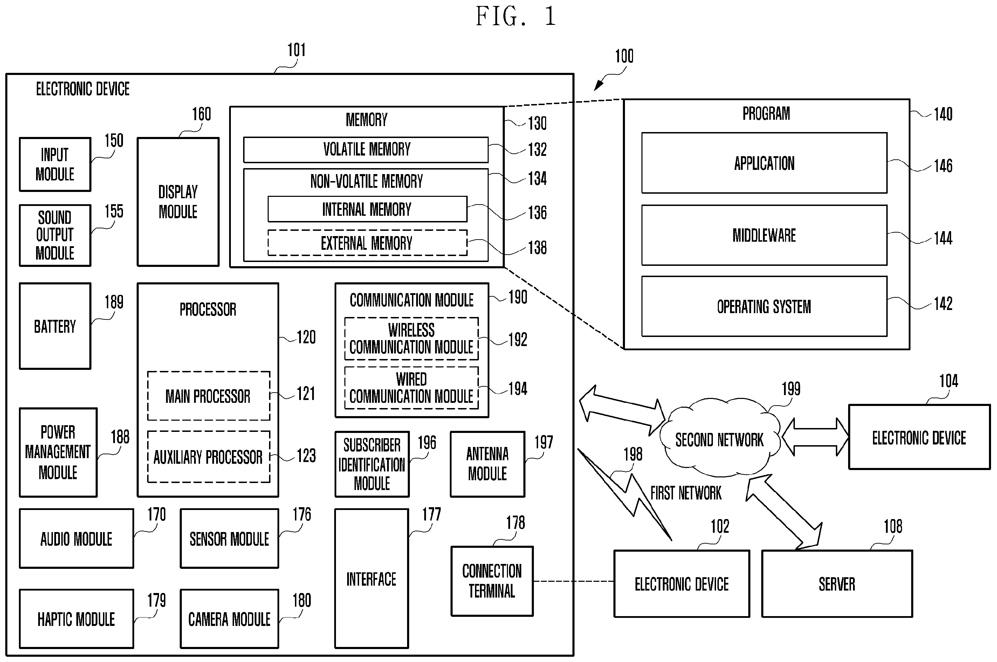

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

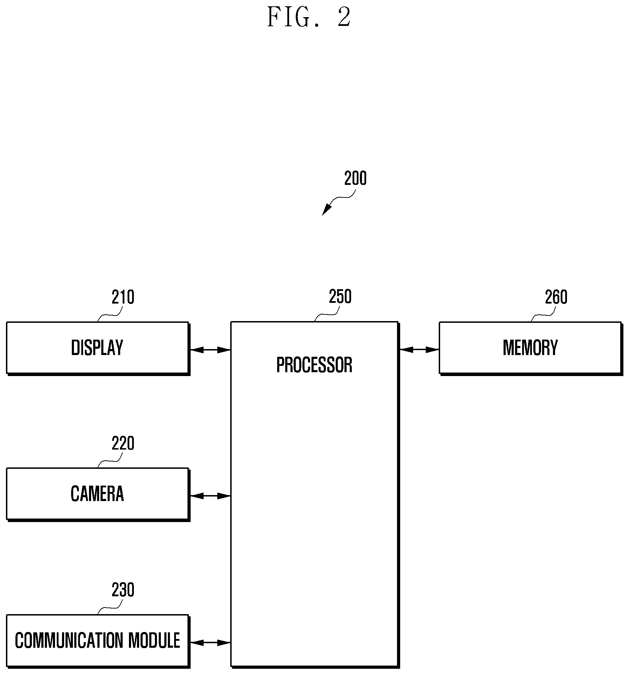

FIG. 2 is a block diagram of an electronic device according to various embodiments.

Referring to FIG. 2, an electronic device 200 may include a display 210, a camera 220, a communication module 230, a processor 250, and a memory 260, and may implement various embodiments of the disclosure even if some of the illustrated configurations are omitted or replaced. The electronic device 200 may further include the configurations and/or functions of the electronic device 101 in FIG. 1.

According to various embodiments, the electronic device 200 may execute a preview mode of the camera 220 to capture a surrounding environment (e.g., a house), and if there is an IoT (Internet of Things) device connectable in the surrounding environment, operate the identified IoT device using the electronic device 200, and if there is no connectable IoT device, display a virtual device corresponding to an IoT device, thereby displaying a virtual operation state. Hereinafter, the IoT device (or real IoT device) may indicate an electronic device such as a TV, an IP camera, a light, or a robot cleaner capable of providing IoT functions.

According to an embodiment, if there is a connectable IoT device, the electronic device 200 may automatically recognize the device when capturing the device through the camera 220, establish a connection with the electronic device 200, and turn on the connected IoT device. In addition, if a user needs to purchase a specific item (or additional components) for the operation of the IoT device, the electronic device may pre-show the operation state in which the item is provided in the camera image (or preview image) through augmented reality (AR).

According to various embodiments, the display 210 may display an image provided from the processor 250. The display 210 may be implemented as one of a liquid crystal display (LCD), a light-emitting diode (LED) display, an organic light-emitting diode (OLED) display, a micro-electromechanical systems (MEMS) display, or an electronic paper display, but is not limited thereto. According to an embodiment, the display 210 may be implemented as a flexible display 210 in which at least a partial area is flexible, and a display area, which is exposed to the outside and displays image information, may vary. For example, the display 210 may be configured as a foldable display or a rollable display. According to an embodiment, the display 210 may include a touch screen that detects a user's touch input. For example, the display 210 may include a capacitive touch screen, but is not limited thereto, and various types of touch screens, such as pressure-sensitive and infrared-type touch screens, may be utilized. The display 210 may include at least some of the configurations and/or functions of the display module 160 in FIG. 1.

According to various embodiments, the camera 220 may capture an external environment and provide image information to the processor 250. The electronic device 200 may include at least one camera on the front side where the display 210 is placed and/or on the back side in the opposite direction, respectively. According to an embodiment, the camera 220 may include a lens assembly including at least one lens for collecting light emitted from an external environment (or a subject), an image sensor (e.g., a charged coupled device (CCD) sensor or a complementary metal oxide semiconductor (CMOS) sensor) for converting light collected through the lens assembly into an electrical signal to generate image data, and an image signal processor for performing various processing on image data acquired from the image sensor. At least some of the above-described configurations of the camera 220 may be omitted or replaced with other configurations. The camera 220 may provide a captured image of an external environment to the processor 250 in real time through an interface (e.g., a mobile industry processor interface). The camera 220 may include at least some of the configurations and/or functions of the camera module 180 in FIG. 1.

According to various embodiments, the communication module 230 may include various hardware and/or software elements for supporting wireless communication with an external device. For example, the communication module 230 may communicate with an external device (e.g., an IoT device) located within a predetermined distance through a short-range wireless communication method such as wireless LAN (Wi-Fi) communication, Bluetooth, or ultra-wideband (UWB), and may communicate with an external base station through cellular communication such as 4G LTE (long-term evolution) and 5G NR (new radio). The communication module 230 may support other standard or non-standard wireless communications in addition to the wireless communication methods described above. The communication module 230 may include at least some of the configurations and/or functions of the communication module 190 in FIG. 1.

According to various embodiments, the memory 260 may include a known volatile memory and non-volatile memory. The memory 260 may store various instructions that may be executed by the processor 250. Such instructions may include control commands such as arithmetic and logical operations, data transfer, and input/output, which may be recognized by the processor 250. The memory 260 may include at least some of the configurations and/or functions of the memory 130 in FIG. 1, and may store at least some of the programs 140 in FIG. 1.

According to various embodiments, the processor 250 is a configuration capable of performing operations or data processing related to control and/or communication of the respective components of the electronic device 200, and may include at least some of the configurations of the processor 120 in FIG. 1. The processor 250 may be operatively, electrically, and/or functionally connected to internal components of the electronic device 200, such as the display 210, the camera 220, the communication module 230, and the memory 260.

According to various embodiments, although the computational and data processing functions capable of being implemented by the processor 250 in the electronic device 200 are not limited, the disclosure will describe various embodiments in which the electronic device 200 analyzes a real-time image acquired from the camera 220 to identify a real IoT device, disposes a virtual IoT device in an empty space on the camera image, controls the operation of the real IoT device and/or the virtual IoT device, and/or provides affordance information associated with the virtual IoT device. The operation of the processor 250 described below may be performed by executing instructions stored in the memory 260.

According to various embodiments, the processor 250 may activate the camera 220 and display a camera image acquired in real time from the camera 220 on the display 210. For example, the camera image may be a preview image, and if the point of view of the camera changes, the surrounding environment displayed through the camera image may change.

According to various embodiments, the processor 250 may analyze the camera image to recognize at least one object located within the camera image and an empty space where an object is not located. For example, the object may be a real IoT device (e.g., a TV, a light, a robot cleaner, an electric curtain, etc.) capable of providing IoT functions, or a general object (e.g., a general curtain, a sofa, a chair, etc.) that is unable to provide IoT functions. A user may take a picture of a specific space, such as a living room, a room, or an office, using the rear camera of the electronic device 200. For example, the electronic device 200 may recognize an object located in the camera image and/or an empty space where an object is not located by scanning the space of the camera image.

According to various embodiments, the processor 250 may recognize a real IoT device from among the objects located in the camera image. According to an embodiment, the processor 250 may recognize a real IoT device by transmitting and receiving a wireless signal using the communication module 230. For example, the communication module 230 may transmit an advertising packet containing information such as a device name, address, and universally unique identifier (UUID) during a Bluetooth scan process, and an IoT device located at a close distance, upon receiving the advertising packet, may perform a predetermined operation, such as notifying a host device connected to the IoT device or making a request for connection. In addition, the processor 250 may recognize an IoT device located nearby using various short-range wireless communications such as UWB and Wi-Fi through the communication module 230, and analyze the relative direction and/or distance with respect to the electronic device 200, thereby determining the location of the IoT device within the camera image. In addition, the processor 250 may filter out a device transmitting signals of a predetermined intensity or higher using various short-range wireless communications, and register the device transmitting signals of a predetermined intensity or higher. The more types of short-range wireless communications are used, the more accurately the proximity of a device may be recognized through signal intensity and the more accurately the location of the device may be recognized through phase difference. Accordingly, it may be utilized to dispose the virtual device at a more precise position during 3D rendering.

According to an embodiment, the processor 250 may recognize an object in the camera image through image analysis of the acquired camera image. For example, the processor 250 may include an AI camera (e.g., Bixby vision) capable of detecting various objects included in the camera image acquired in real time. The processor 250 may recognize objects (e.g., a curtain, a light, a stand, etc.) not supporting wireless signal transmission and reception functions, as well as devices capable of being recognized through wireless signal transmission and reception, using the AI camera.

According to various embodiments, the processor 250 may display a real IoT device recognized within the camera image displayed on the display 210 so as to be recognizable. For example, the processor 250 may display an indicator, indicating the recognized real IoT device, to overlap or adjacent to the real IoT device, highlight the real IoT device, and/or provide a distinct visual effect to an area including the real IoT device.

According to various embodiments, the processor 250 may display one or more control items respectively corresponding to the recognized real IoT devices on the display 210. Here, the control item may include at least one button capable of controlling the operation of the real IoT device. When a plurality of real IoT devices are recognized from the camera image, the processor 250 may display control items corresponding to the IoT devices, respectively. According to an embodiment, the processor 250 may display, on the display 210, the control item in an area separate from the camera image. According to another embodiment, the processor 250 may display the control item in a pop-up form overlaid on the camera image on the display 210. According to an embodiment, the processor 250 may display a control item in a designated area, based on a user input for an indicator indicating the real IoT device or the virtual IoT device.

According to various embodiments, the processor 250 may transmit a control command to the real IoT device, based on a user input to the control item. For example, based on a user input to a power button of the control item, the processor 250 may transmit a power-on/off command to a connected TV through the communication module 230.

According to various embodiments, the processor 250 may recognize an empty space in the surrounding environment through analysis of the camera image and determine a virtual IoT device capable of being disposed in the empty space. The electronic device 200 may pre-store information related to various types of IoT devices or obtain the information from a cloud server and, if an empty space is identified, select an appropriate IoT device from the pre-stored information and/or a list of IoT devices received from the cloud server.

According to various embodiments, the processor 250 may display the determined virtual IoT device in the camera image. For example, the virtual IoT device may be a graphic object having substantially the same shape as the corresponding device. The processor 250 may display the virtual IoT device in augmented reality on the surrounding environment of the camera image.

According to various embodiments, the processor 250 may display a control item corresponding to the virtual IoT device. In the case where real IoT devices exist in the camera image, the processor 250 may display both control items for controlling the respective real IoT devices and control items for controlling respective virtual IoT devices.

According to various embodiments, the processor 250 may display an execution state of the virtual IoT device in response to a user input. For example, if an input for a start/stop button on a control item of a robot cleaner is detected, the electronic device 200 may generate a real operation screen, such as movement of the robot cleaner, and display it within the camera image. The processor 250 may display the execution state of the virtual IoT device in augmented reality on the surrounding environment of the camera image. Accordingly, although the virtual IoT device, i.e., the robot cleaner, does not exist in the real environment, the user may predict the operation state when the robot cleaner is disposed in the real environment.

According to various embodiments, the processor 250 may display an affordance item related to the virtual IoT device. The affordance item may be displayed in a pop-up form adjacent to the virtual IoT device within the camera image, or may be displayed in a separate area from the camera image. The affordance item may include text and/or image information including product information of the virtual IoT device, and a link to a website for purchase of the virtual IoT device. In response to a user input to the affordance item, the processor 250 may access an application or website where the corresponding virtual IoT device is able to be purchased and display a related web page. The user may purchase a real IoT device corresponding to the virtual IoT device from the web page and dispose it in the surrounding environment, thereby utilizing the same. According to an embodiment, the processor 250 may display the affordance item in a designated area, based on a user input to an indicator indicating the real IoT device or the virtual IoT device.

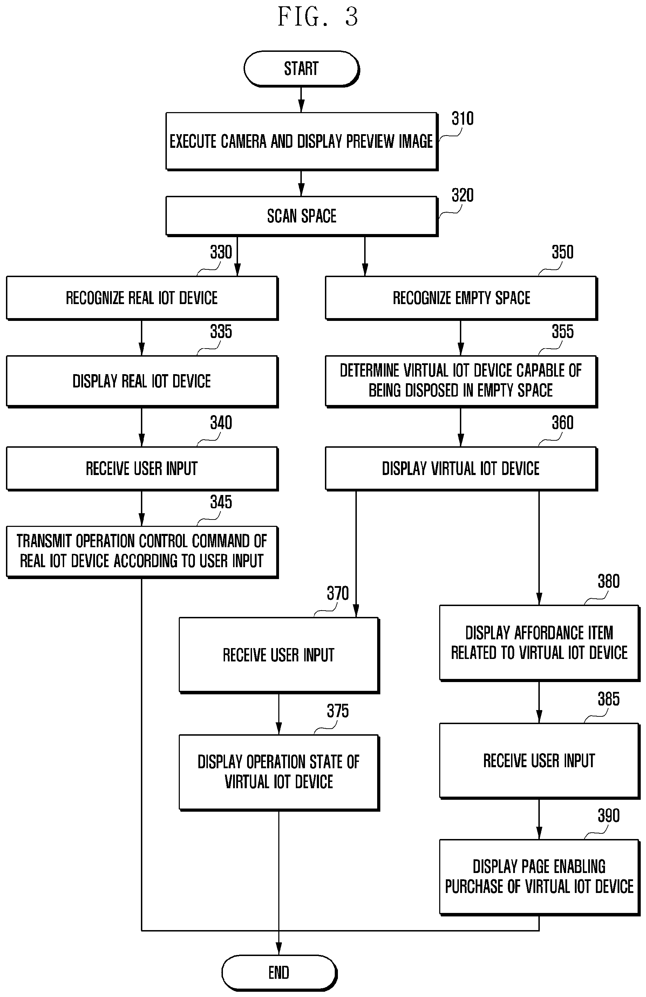

FIG. 3 is a flowchart illustrating a method for providing a virtual IoT environment of an electronic device according to various embodiments.

The method illustrated in FIG. 3 may be performed by an electronic device (e.g., the electronic device 200 in FIG. 2), and the technical features described above will be omitted from the description below.

According to various embodiments, in operation 310, the electronic device may activate a camera (e.g., the camera 220 in FIG. 2) and display a camera image (e.g., a preview image) acquired in real time from the camera on a display (e.g., the display 210 in FIG. 2).

According to various embodiments, in operation 320, the electronic device may analyze the camera image and scan the space within the camera image. The user may take a picture of a specific space, such as a living room, a room, or an office, using the rear camera of the electronic device. For example, the electronic device may recognize an object located within the camera image and/or an empty space where an object is not located by scanning the space of the camera image. The electronic device may perform operations 330 to 345, based on a result of recognizing the object, and may perform operations 350 to 390, based on a result of recognizing the empty space. Operations 330 to 345 and operations 350 to 390 may be performed in parallel with each other, and at least some of the operations may be performed simultaneously.

According to various embodiments, in operation 330, the electronic device may recognize a real IoT device located within the camera image.

According to an embodiment, the electronic device may recognize a real IoT device through transmission and reception of a wireless signal. For example, the electronic device may transmit an advertising packet containing information such as a device name, address, and universally unique identifier (UUID) during a Bluetooth scan process, and an IoT device located at a close distance, upon receiving the advertising packet, may perform a predetermined operation, such as notifying a host device connected to the IoT device or making a request for connection. In addition, the processor 250 may recognize an IoT device located nearby using various short-range wireless communications such as UWB and Wi-Fi, and analyze the relative direction and/or distance with respect to the electronic device, thereby determining the location of the IoT device within the camera image. In addition, the electronic device may filter out a device transmitting signals of a predetermined intensity or higher using various short-range wireless communications, and register the device transmitting signals of a predetermined intensity or higher. The more types of short-range wireless communications are used, the more accurately the proximity of a device may be recognized through signal intensity and the more accurately the location of the device may be recognized through phase difference. Accordingly, it may be utilized to dispose the virtual device at a more precise position during 3D rendering.

According to an embodiment, the electronic device may recognize an object within the camera image through image analysis of the acquired camera image. For example, the electronic device may include an AI camera (e.g., Bixby vision) capable of detecting various objects included in the camera image acquired in real time. The electronic device may recognize objects (e.g., a curtain, a light, a stand, etc.) not supporting wireless signal transmission and reception functions, as well as devices capable of being recognized through wireless signal transmission and reception, using the AI camera.

According to an embodiment, the electronic device may establish a connection with the recognized real IoT device. For example, if a connection with a specific IoT device is not currently established, the electronic device may establish a connection through short-range wireless communication (e.g., Wi-Fi) and register connection information with a cloud server that provides IoT services.

According to various embodiments, in operation 335, the electronic device may display the real IoT device recognized within the camera image so as to be recognizable. For example, the electronic device may display an indicator, indicating the recognized real IoT device, to overlap or adjacent to the real IoT device, highlight the real IoT device, and/or provide a distinct visual effect to an area including the real IoT device.

According to an embodiment, the electronic device may display one or more control items respectively corresponding to the recognized real IoT devices on the display. The electronic device may display a control item area including at least one control item separately from an area where the camera image is displayed (e.g., at the bottom of the camera image), and as will be described below, the control item area may include at least one control item corresponding to the real IoT device and at least one control item corresponding to the virtual IoT device.

According to various embodiments, in operation 340, the electronic device may receive a user input to the control item. For example, a control item corresponding to a TV, as a real IoT device, may include a power button, a channel control button, and/or a volume control button, and the user input may be an input to a specific button of the control item.

According to various embodiments, in operation 345, the electronic device may transmit an operation control command for the real IoT device in response to the user input to the control item. For example, if the user selects a TV power button on the control item, a TV on/off command may be directly transmitted to the TV through the established short-range wireless communication, and/or transmitted to the TV via a cloud server on the network.

According to various embodiments, in operation 350, the electronic device may recognize an empty space in the camera image. For example, the electronic device may recognize an object or the space in the camera image through transmission/reception of a wireless signal and/or image analysis using an AI camera, and may recognize a space having a predetermined size or more in which an object is not recognized as an empty space.

According to various embodiments, in operation 355, the electronic device may determine a virtual IoT device capable of being disposed in the identified empty space. The electronic device may pre-store information related to various types of IoT devices or obtain information from a cloud server and, if an empty space is identified, select an appropriate IoT device from the pre-stored information and/or a list of IoT devices received from the cloud server.

According to an embodiment, the electronic device may recognize a pattern of the recognized spaces, extract their features, and determine virtual IoT devices suitable for the spaces. For example, if the environment being captured through the camera image is messy with many objects and few empty spaces, the electronic device may select a device that is helpful for organizing and has a small volume (e.g., a handheld cleaner). Alternatively, if the environment being captured is in a well-organized state with many objects and few empty spaces, the electronic device may select an additional device that is convenient and helpful for organizing the surrounding environment better or a device having a small volume (e.g., an air purifier, a water purifier, an air dresser, a smart picture frame, etc.). Alternatively, if the environment being captured is messy with few objects and many empty spaces, the electronic device may select a device that is helpful for organization and has a large volume (e.g., a robot cleaner, a storage closet, etc.). Alternatively, if the environment being captured is in a well-organized state with few objects and many empty spaces, the electronic device may select an additional device that is convenient and helpful for organizing the surrounding environment better or a device having a large volume (e.g., a robot cleaner, a smart speaker, etc.).

According to various embodiments, in operation 360, the electronic device may display the determined virtual IoT device in the camera image. The electronic device may display the virtual IoT device in an augmented reality on the surrounding environment of the camera image.

According to an embodiment, the electronic device may display the virtual IoT device so as to be distinguished from the objects including the real IoT devices in the camera image. In addition, the electronic device may display an indicator, indicating the virtual IoT device, adjacent to or overlapping the virtual IoT device, and display a control item corresponding to the virtual IoT device.

According to various embodiments, in operation 370, the electronic device may receive a user input to the control item corresponding to the virtual IoT device. For example, if the selected virtual IoT device is a robot cleaner, the control item may include a start/stop button of the robot cleaner.

According to various embodiments, in operation 375, the electronic device, in response to the user input, may display the operation state of the virtual IoT device. The electronic device may display the operation state of the virtual IoT device in augmented reality on the surrounding environment of the camera image. For example, if an input to a start/stop button on the control item of the robot cleaner is detected, the electronic device may generate a real operation screen, such as movement of the robot cleaner, and display it in the camera image. Accordingly, although the robot cleaner, which is a virtual IoT device, does not exist in the real environment, the user may predict the operation state when the robot cleaner is disposed in reality.

According to various embodiments, in operation 380, the electronic device may display an affordance item related to the virtual IoT device. The affordance item may be displayed in a pop-up form adjacent to the virtual IoT device in the camera image, or may be displayed in a separate area from the camera image. The affordance item may include text and/or image information including product information of the virtual IoT device, and a link to a website for purchase of the virtual IoT device.

According to various embodiments, in operation 385, the electronic device may receive a user input to the affordance item. According to various embodiments, in operation 390, the electronic device may access a website where the corresponding virtual IoT device is able to be purchased in response to the user input and display a related web page.

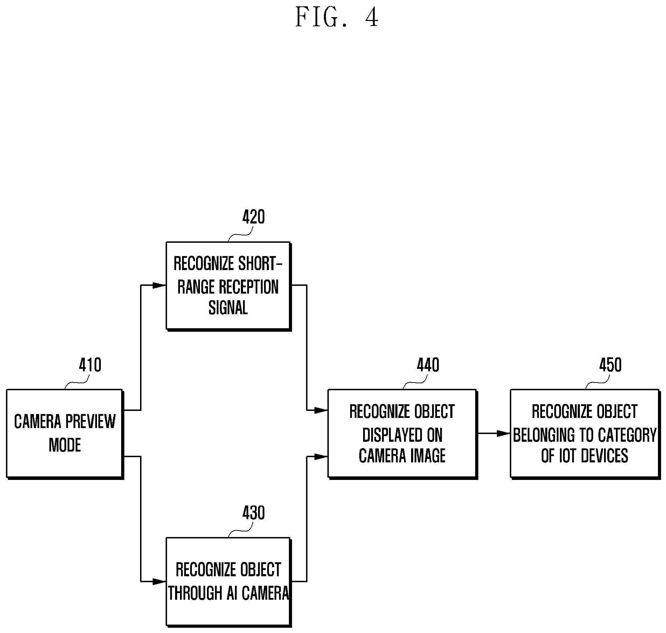

FIG. 4 is a flowchart illustrating a method for an electronic device to recognize a real object according to various embodiments.

The method illustrated in FIG. 4 may be performed by an electronic device (e.g., the electronic device 200 in FIG. 2), and the description of the technical features described above will be omitted below.

According to various embodiments, in operation 410, the electronic device may activate a camera (e.g., the camera 220 in FIG. 2) to execute a preview mode, and display a camera image (or a preview image) acquired in real time on a display (e.g., the display 210 in FIG. 2). The user may capture a specific space, such as a living room, a room, or an office, using a rear camera of the electronic device, and the captured camera image may include a plurality of obj ects that belong or do not belong to IoT devices.

According to various embodiments, in operation 420, the electronic device may recognize a short-range wireless communication signal transmitted from an adjacent IoT device. According to an embodiment, the electronic device may support short-range wireless communication, such as Wi-Fi, Bluetooth (or Bluetooth low energy (BLE)), and ultra-wideband (UWB). The electronic device may recognize an adjacent IoT device by transmitting and receiving a short-range wireless communication signal. For example, the electronic device may transmit an advertising packet containing information such as a device name, address, and universally unique identifier (UUID) during a Bluetooth scan process, and an IoT device located at a close distance, upon receiving the advertising packet, may perform a predetermined operation, such as notifying a host device connected to the IoT device or making a request for connection. In addition, the electronic device may recognize an IoT device located nearby using various short-range wireless communications such as UWB and Wi-Fi, and analyze the relative direction and/or distance with respect to the electronic device, thereby determining the location of the IoT device within the camera image. In addition, the electronic device may filter out a device transmitting signals of a predetermined intensity or higher using various short-range wireless communications, and register the device transmitting signals of a predetermined intensity or higher. The more types of short-range wireless communications are used, the more accurately the proximity of a device may be recognized through signal intensity and the more accurately the location of the device may be recognized through phase difference. Accordingly, it may be utilized to dispose the virtual device at a more precise position during 3D rendering.

According to various embodiments, in operation 430, the electronic device may recognize at least one object included in the camera image using an AI camera. For example, the electronic device may include an AI camera (e.g., Bixby vision) capable of detecting various objects included in the camera image acquired in real time. The electronic device may recognize objects (e.g., a curtain, a light, a stand, etc.) not supporting wireless signal transmission and reception functions, as well as devices capable of being recognized through wireless signal transmission and reception, using the AI camera. According to various embodiments, operations 420 and 430 may be performed sequentially or at least partially simultaneously.

According to various embodiments, in operation 440, the electronic device may recognize an object displayed within the camera image. For example, the electronic device may recognize at least one object included in the camera image through wireless signal transmission and reception in operation 420 and/or object recognition using the AI camera in operation 430. The recognized object may include an IoT device equipped with an IoT function, such as a TV, an air conditioner, or a robot cleaner, an object, such as a light or curtain, that is not currently equipped with an IoT function but to which an IoT function may be added through a hub, and/or an object that is unable to provide an IoT function, such as a flowerpot or a sofa.

According to various embodiments, in operation 450, the electronic device may recognize an object belonging to the category of IoT devices from among the objects recognized in the camera image. For example, the electronic device may recognize an object belonging to a list of IoT devices stored in the memory and/or a database of a cloud server, from among the objects recognized in operation 440, as an IoT device. According to an embodiment, the electronic device may recognize a device to which IoT functions is able to be added from the database, among general objects (e.g., curtains, lights, stands, etc.) that do not support wireless signal transmission and reception, so as to distinguish it from other objects.

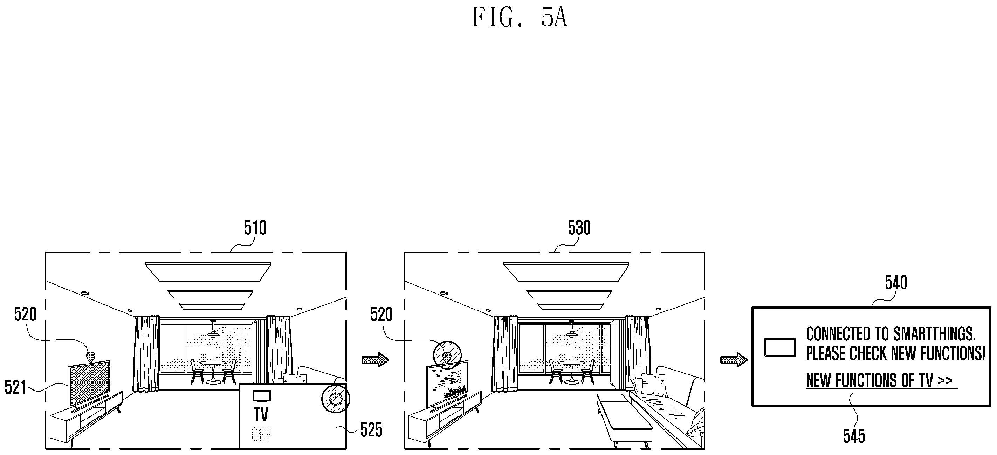

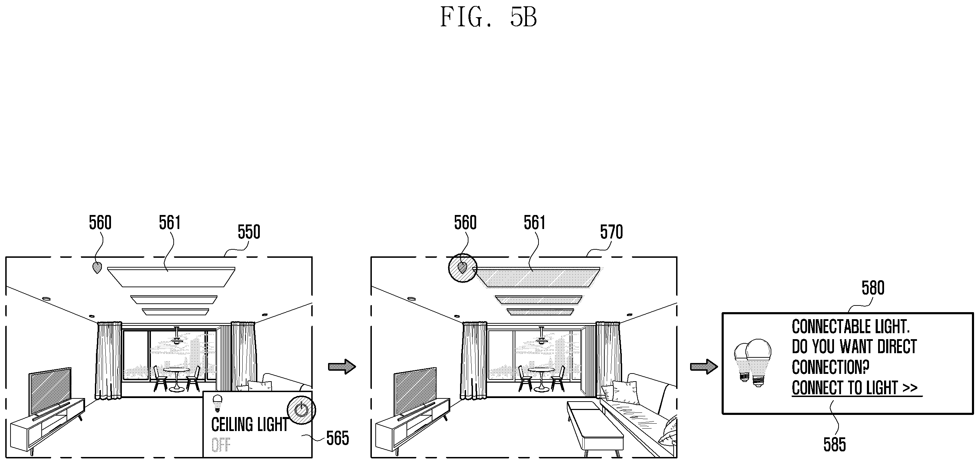

FIG. 5A and FIG. 5B illustrate real IoT devices recognized from a camera image according to various embodiments.

FIGS. 5A and 5B illustrate camera images captured in real time by a camera (e.g., the camera 220 in FIG. 2) of an electronic device (e.g., the electronic device 200 in FIG. 2) and displayed on a display (e.g., the display 210 in FIG. 2).

Referring to FIGS. 5A and 5B, a TV 521, which is an IoT device capable of connecting with an electronic device via wireless communication, a light 561, which is an object capable of providing an IoT function through connection with an IoT hub, and a curtain capable of providing an IoT function by installing additional components (or items) may be located within the surrounding environment being captured.

According to an embodiment, an electronic device (e.g., the electronic device 200 in FIG. 2) may recognize one or more objects located within a camera image 510 through recognition of a short-range wireless communication signal received from an external device and/or image analysis of an AI camera (e.g., Bixby vision), and recognize a real IoT device from among the recognized objects. For example, among the TV 521, the light 561, and the curtain, which are objects recognized in FIG. 5A, the electronic device may recognize the TV 521, which belongs to the IoT device list of the database, as a real IoT device.

According to an embodiment, the electronic device may display an indicator 520 indicating the identified real IoT device (e.g., the TV 521) within the camera image 510. The indicator 520 may be displayed overlapping and/or adjacent to the real IoT device.

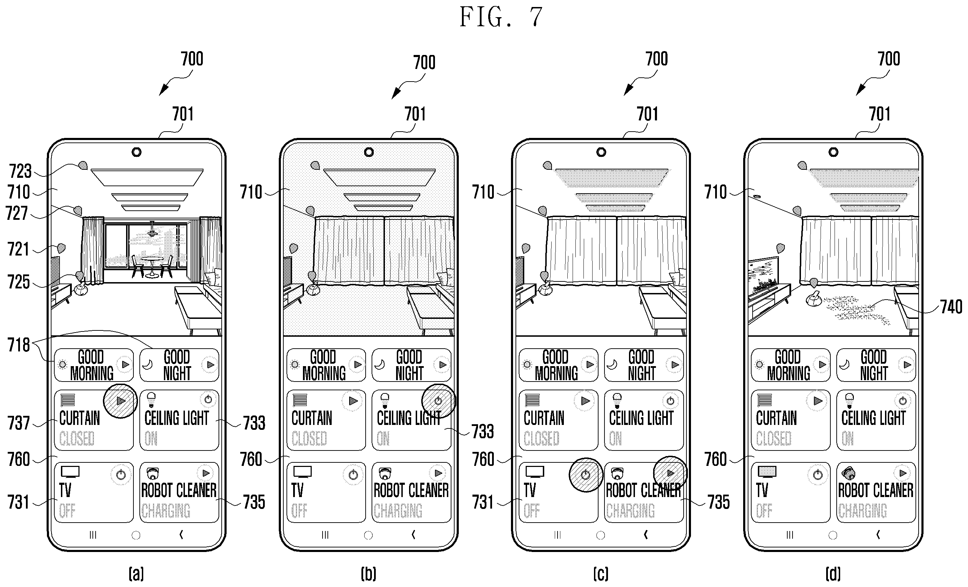

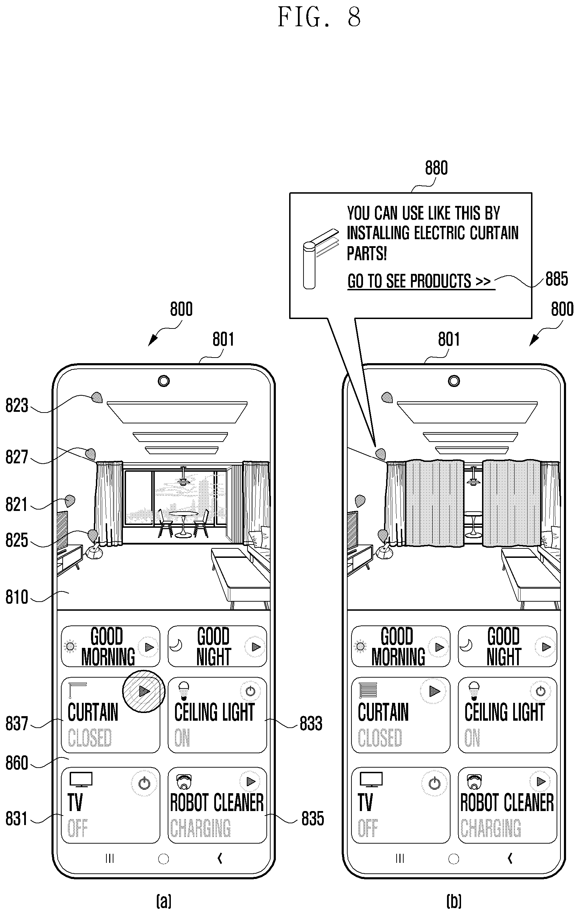

According to an embodiment, the electronic device may display a control item 525 capable of controlling the operation of the identified real IoT device. For example, the control item 525 corresponding to the real IoT device, i.e., the TV 521, may include a power button, a channel control button, and/or a volume control button. According to an embodiment, as illustrated in FIGS. 7 and 8, the electronic device may display at least one control item in an area distinct from the camera image. According to another embodiment, the electronic device may display the control item 525 in a pop-up form in an area of the camera image 510.

According to an embodiment, the electronic device may transmit an operation control command of the real IoT device in response to a user input to the control item 525. For example, if the user selects a power button of the TV 521 on the control item 525, the on/off command for the TV 521 may be directly transmitted to the TV 521 through a short-range wireless communication established between the TV 521 and a communication module (e.g., the communication module 230 in FIG. 2), and/or transmitted to the TV 521 through a cloud server on the network. The TV 521 may be turned on according to the control command received from the electronic device. Accordingly, the user may identify that the real TV 521 is turned on in the camera image 530.

According to an embodiment, the electronic device may provide an affordance item 540 corresponding to the identified real IoT device. Referring to FIG. 5A, the affordance item 540 may include text and/or image information about additional functions that may be further provided through the real IoT device, and may include a link 545 for access to a website that provides additional functions or purchases of additional products. If the user selects the link 545 in the affordance item 540, the linked website may be displayed, and the user may obtain additional information about the IoT device or purchase additional products from the website.

Referring to FIG. 5B, the light 561 located within the environment being captured may be an object that is connected to an IoT hub to provide IoT functions but not yet connected to the electronic device.

According to an embodiment, the electronic device may display an indicator 560 corresponding to the identified object, i.e., the light 561, within the camera image 550. For example, the electronic device may display the indicator 560 adjacent to or at least partially overlapping the object, i.e., the light 561. The electronic device may display a control item 565 corresponding to the light 561 and, based on a user input to the control item 565, transmit a control command to an IoT hub connected to the light 561 to turn on the light 561. According to an embodiment, if a touch input to the indicator 560 is detected, the electronic device may display the control item 565 on an area separated from the camera image 550 or display it in a pop-up form on at least a portion of the camera image 550.

According to an embodiment, the electronic device may display an affordance item 580 corresponding to the object. For example, the affordance item 580 corresponding to the light 561, which is an object that is not yet connected to the electronic device, may include text and/or image information, indicating that it is connectable, and a link 585 enabling access to an application or website capable of performing the connection. If the user selects the link 585 of the affordance item 580, the electronic device may attempt to connect and register with a hub connected to the light. According to an embodiment, if a touch input to the indicator 560 is detected, the electronic device may display the affordance item 580 on an area separated from the camera image 550 or display it in a pop-up form on at least a portion of the camera image 550.

According to an embodiment, if the electronic device is connected to the light (or the hub connected to the light), a control item corresponding to the light may be displayed. Thereafter, in response to a user input to the control item, the electronic device may transmit a control command to the light, and accordingly, the light 561 may be turned on, as illustrated in FIG. 5B.

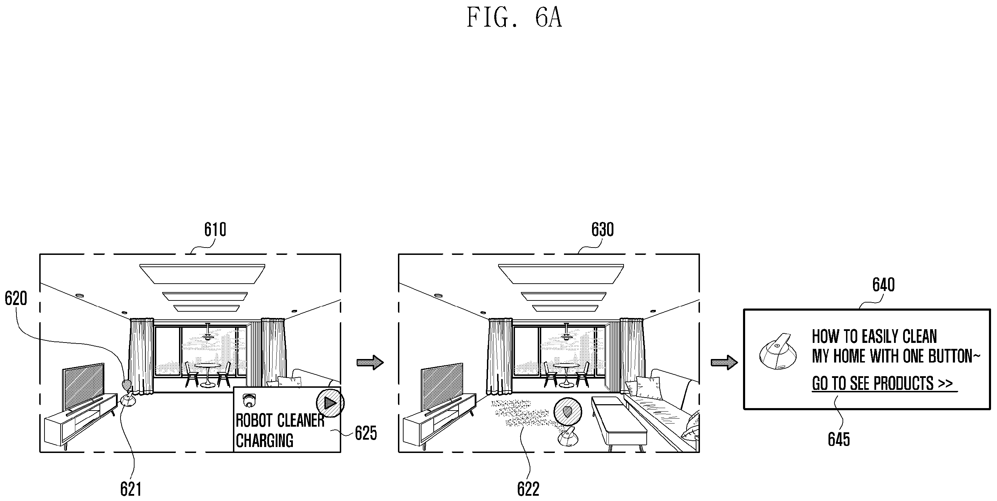

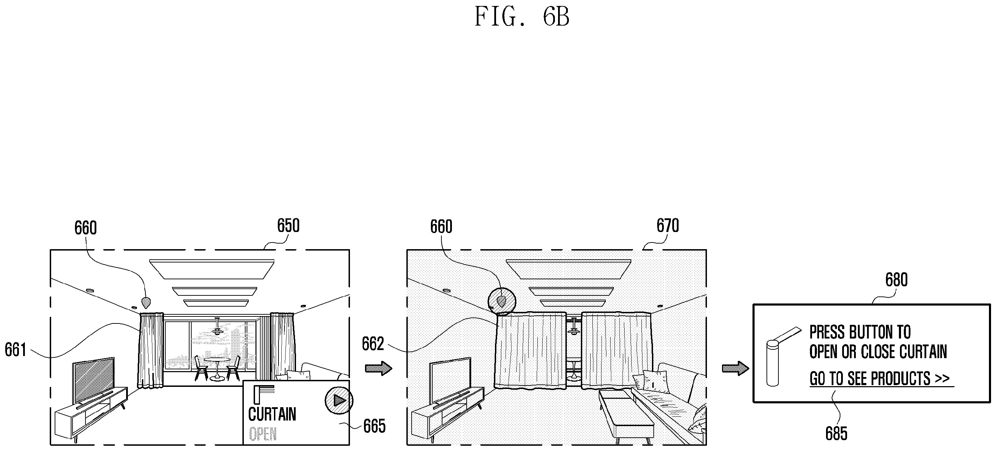

FIG. 6A and FIG. 6B illustrate virtual IoT devices capable of being disposed in a camera image according to various embodiments.

According to various embodiments, an electronic device (e.g., the electronic device 220 in FIG. 2) may determine at least one space in a camera image, identify an IoT device capable of being disposed in the determined space, and display a virtual IoT device corresponding to the identified IoT device in the determined space within the image. Here, the virtual IoT device may be a graphic object in the form of a real IoT device.

Referring to FIG. 6A, the electronic device may recognize a space between a TV and a curtain as an empty space in a camera image 610 captured in real time. The electronic device may determine a robot cleaner as an IoT device capable of being disposed in the empty space, and display a virtual IoT device 621, which is a graphic object in the form of a robot cleaner, in the camera image. The electronic device may display an indicator 620, indicating the virtual IoT device 621, adjacent to the virtual IoT device 621.

According to an embodiment, the electronic device may display a control item 625 capable of controlling the virtual operation of the virtual IoT device 621. The control item 625 corresponding to the virtual IoT device 621 may be substantially the same as a control item (e.g., the control item 525 in FIG. 5A) corresponding to the real IoT device.

According to an embodiment, the electronic device, based on a user input to the control item 625, may display a virtual operation state 622 corresponding to the operation state of the virtual IoT device 621 during operation within the camera image 630. For example, if a start button for a robot cleaner is pressed, the robot cleaner may move to another space in the house. The virtual operation state 622 may show the same effect as the real robot cleaner moving as a movement of a graphic object. Accordingly, the user may predict the real operation state when purchasing and installing the corresponding IoT device through the image 630 in which the real environment and the operation state of the virtual IoT device 621 overlap each other.

According to an embodiment, the electronic device may provide an affordance item 640 corresponding to the virtual IoT device 621. Referring to FIG. 6A, it may include text and/or image information including related information of a robot cleaner corresponding to the virtual IoT device 621 and a link 645 to an application or website for purchasing the robot cleaner. If the user selects the link of the affordance item 640, the electronic device may access the application or website for purchasing the robot cleaner and provide a corresponding screen thereof to the user through the display.

Referring to FIG. 6B, among the objects recognized from the camera image 650, a curtain 661 may be an object that may provide an IoT function through the installation of an additional product. For example, an electric curtain with an automatic opening/closing device added, unlike a curtain in the real environment, may provide a function to automatically open and close the electric curtain through an input onto the electronic device.

According to an embodiment, the electronic device may display an indicator 660 corresponding to the recognized object (e.g., the electric curtain) and a control item 665 capable of controlling the electric curtain. The electronic device, based on a user input to the control item, may display a virtual operation state 662 of the electric curtain, which is a virtual IoT device. For example, if the user selects a close button on the control item 665, the electronic device may display a virtual operation state 662 providing an effect similar to opening the curtain within the camera image 670.

According to an embodiment, the electronic device may provide an affordance item 680 corresponding to the virtual IoT device. Referring to FIG. 6B, it may include text and/or image information including information of the electric curtain corresponding to the virtual IoT device and a link 685 to an application or website for purchasing the electric curtain. If the user selects the link 685 of the affordance item 680, the electronic device may access an application or website for purchasing the electric curtain and provide a corresponding screen thereof to the user through the display.

FIG. 7 illustrates a camera image and a control item for controlling an IoT device according to various embodiments.

According to various embodiments, an electronic device 700 (e.g., the electronic device 200 in FIG. 2) may display a camera image 710 (or a preview image) acquired in real time through a camera (e.g., the camera 220 in FIG. 2) on a first area (or a camera image display area) of a display 701 (e.g., the display 210 in FIG. 2). The electronic device 700 may display control items 731, 733, 735, and 737 corresponding to respective real IoT devices recognized from the camera image 710 and/or virtual IoT devices disposed in the space of the camera image 710 on a second area 760 (or a control item area) of the display 701. Referring to FIG. 7, although the camera image 710 and the control items are displayed on the first area at the top and the second area 760 at the bottom of the display 701, respectively, the locations thereof are not limited thereto.

Referring to FIG. 7, the image 710 of the surrounding environment captured using the camera of the electronic device 700 may include various objects, and for example, a TV 721, a light 723, and a curtain 727 may be recognized.

According to an embodiment, the electronic device 700 may recognize one or more objects located in the camera image 710 through the recognition of a short-range wireless communication signal and/or the image analysis of an AI camera (e.g., Bixby vision), and recognize real IoT devices from among the recognized objects. For example, the electronic device 700 may recognize the TV 721 and the light 723) belonging to the IoT device list of the database, among the objects, such as the TV 721, the light 723, and the curtain 727, recognized in FIG. 7, as real IoT devices.

According to an embodiment, the electronic device 700 may determine an IoT device to be disposed in an empty space within the camera image 710 and display a virtual IoT device corresponding to the determined IoT device in the camera image 710. For example, the electronic device 700 may determine a robot cleaner 725 as an IoT device capable of being disposed in the space between the TV 721 and the curtain 727, and an electric curtain capable of replacing the curtain 727, and display a virtual IoT device 727 corresponding to the electric curtain.

According to an embodiment, the electronic device 700 may display control items 731, 733, 735, and 737 respectively corresponding to the real IoT devices and/or the virtual IoT devices in the second area of the display 701. For example, referring to FIG. 7, a control item 731 capable of controlling the TV 721 as a real IoT device, a control item 733 capable of controlling the light 723, a control item 735 capable of controlling the robot cleaner 725 as a virtual IoT device, and a control item 737 capable of controlling the electric curtain 727 may be displayed. Each of the control items 731, 733, 735, and 737 may include image/text information indicating an IoT device, a current state, and/or at least one button capable of controlling the operation of the device. According to an embodiment, the electronic device 700 may provide an integrated control item 738 capable of controlling a plurality of IoT devices at once. For example, if Good-morning button of the integrated control item 738 is selected, control may be performed such that the electric curtain 727 is opened, the light 723 is turned off, and the robot cleaner 725 is operated.

According to an embodiment, if a real IoT device is recognized from the camera image or if a virtual IoT device is determined through image analysis, the electronic device 700 may display a control item corresponding to the real IoT device or the virtual IoT device on one area of the display. According to another embodiment, based on a user input to an indicator indicating the real IoT device or the virtual IoT device, the electronic device 700 may display a control item on one area of the display.

According to an embodiment, the electronic device 700 may transmit an operation control command of the real IoT device, based on a user input to the control item corresponding to the real IoT device. In (a) of FIG. 7, if the user selects a close button on the control item 737 of the electric curtain 727, the electronic device 700 may transmit a control command to close the electric curtain 727. In addition, in (b) of FIG. 7, if the user selects a turn-on button on the control item 733 of the light 723, the electronic device 700 may transmit a control command to turn on the light 723.

According to an embodiment, based on a user input to the control item of the virtual IoT device, the electronic device 700 may display a virtual operation state corresponding to an operation state of the IoT device during operation in the camera image 710. In (c) of FIG. 7, if the user selects a start button of the control item 735 of the robot cleaner 725, which is a virtual IoT device, as shown in (d) of FIG. 7, the electronic device 700 may display, within the camera image 710, a virtual operation state 740 including movement of a graphic object showing the same effect as the real robot cleaner 725 moving.

FIG. 8 illustrates a camera image and an affordance item for a virtual IoT device according to various embodiments.

According to various embodiments, the electronic device 800 may provide an affordance item 880 corresponding to a virtual IoT device further displayed on an empty space in a camera image 810. Referring to FIG. 8, the electronic device 800 may generate a virtual object corresponding to an electric curtain 827 as a virtual IoT device and display it within the camera image 810.

Referring to FIG. 8, the electronic device 800 may display the camera image 810 on a first area of a display 801 and display control items 831, 833, 835, and 837 respectively corresponding to real IoT devices and virtual IoT devices on a second area of the display 801. In (a) of FIG. 8, if the user presses a close button of the electric curtain as a virtual IoT device, the electronic device 800 may implement a virtual operation state showing the same effect as the electric curtain closing within the camera image 810, as shown in (b) of FIG. 8.

According to an embodiment, the electronic device 800 may provide an affordance item 880 corresponding to the virtual IoT device. For example, the affordance item 880 may include text and/or image information including information of the electric curtain corresponding to the virtual IoT device and a link 885 to an application or website for purchasing the electric curtain. If the user selects the link 885 of the affordance item 880, the electronic device 800 may access an application or website for purchasing electric curtains and provide a corresponding screen thereof to the user through the display 801.

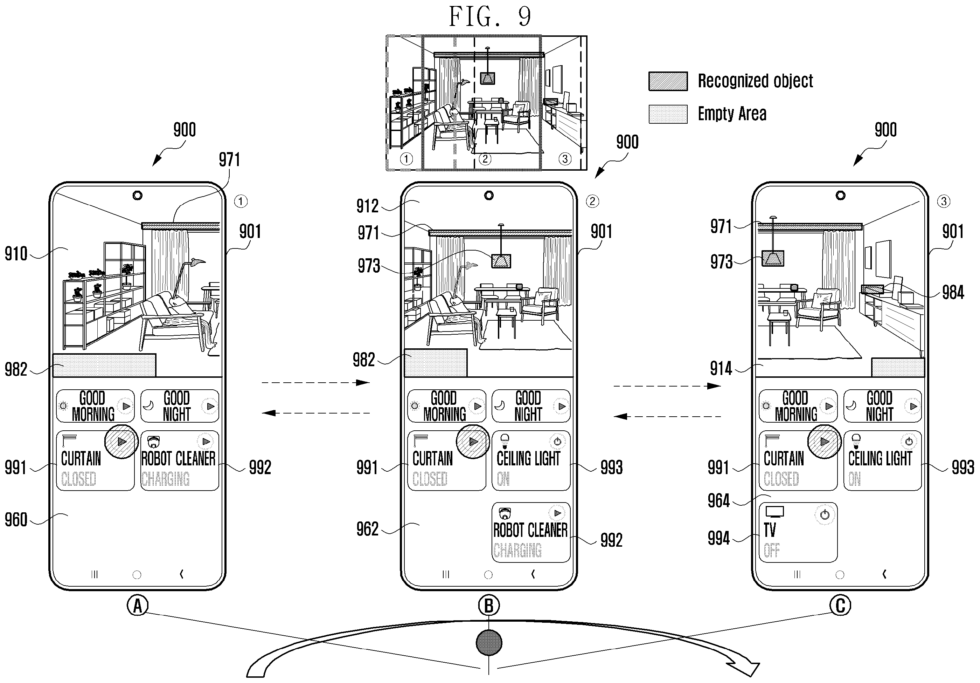

FIG. 9 illustrates a change in a camera image and a control item depending on a change in a camera viewpoint according to various embodiments.

According to an embodiment, when the viewpoint of a camera (e.g., the camera 220 in FIG. 2) is changed so that a real IoT device displayed is added to be displayed on the image, an electronic device 900 (e.g., the electronic device 200 in FIG. 2) may recognize the added real IoT device and display a control item of the further recognized real IoT device. In addition, if the viewpoint of the camera is changed so that the real IoT device displayed in the image disappears, the electronic device 900 may recognize that the real IoT device has disappeared and remove the control item of the corresponding real IoT device.

According to an embodiment, when the viewpoint of the camera is changed so that the empty space in the camera image disappears, the electronic device 900 may remove the virtual IoT device and control item that are determined to be disposed in the empty space.

(A) of FIG. 9 illustrates a state in which the camera is capturing the left side of the surrounding environment. From the viewpoint (A) of FIG. 9, an electric curtain 971 may be recognized as a real IoT device in the camera image. In addition, the electronic device 900 may determine an empty space capable of disposing an IoT device in the camera image and a virtual IoT device capable of being disposed in the empty space. Referring to (A) in FIG. 9, a robot cleaner may be determined to be disposed in the lower space 980. The electronic device 900 may display a control item 991 of the electric curtain, which is the recognized real IoT device, and a control item 992 of the robot cleaner, which is the virtual IoT device, in a control item area 960 on a display 901.

(B) of FIG. 9 illustrates a state in which the camera is capturing the center of the surrounding environment. From the viewpoint (B) of FIG. 9, a light 973 and an electric curtain 971 may be recognized as real IoT devices from the camera image. In addition, the electronic device 900 may determine that the robot cleaner is able to be disposed in the lower space 982. The electronic device 900 may further display a control item 993 of the light 973, which is the real IoT device further recognized, on the display 901.

(C) of FIG. 9 illustrates a state in which the camera is capturing the right side of the surrounding environment. From the viewpoint (C) of FIG. 9, the light 973 and the electric curtain 971 may be recognized as real IoT devices from the camera image. In addition, the electronic device 900 may determine that a TV is able to be disposed as a virtual IoT device in the right space 984. The electronic device 900 may display a virtual object of the TV within the camera image and further display a control item 994 of the TV. In addition, the space 982 for disposing the robot cleaner recognized in (A) and (B) in FIG. 9 may not be visible depending on the change in the viewpoint of the camera. The electronic device 900 may remove the virtual object and control item 992 of the robot cleaner depending on the change in the viewpoint.

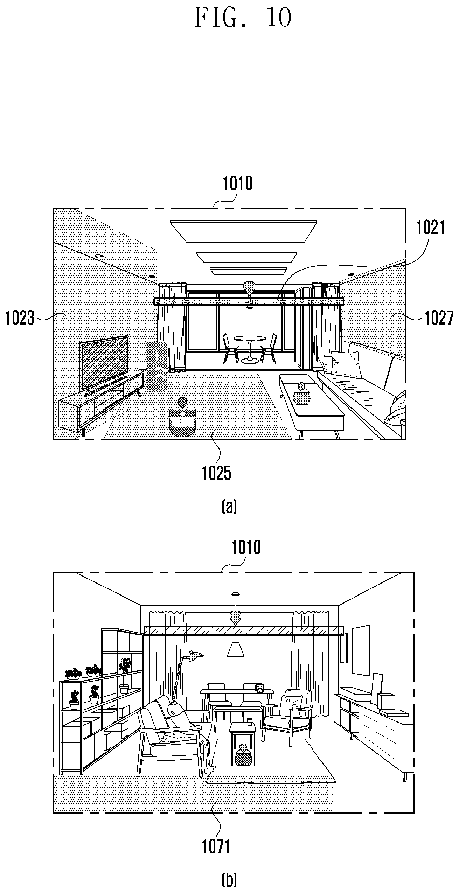

FIG. 10 illustrates an example of recommending a virtual IoT device depending on a real environment according to various embodiments.

(a) and (b) of FIG. 10 show different surrounding environments. The electronic device may analyze objects and empty spaces in the camera image, and determine virtual IoT devices capable of being disposed in the empty spaces depending on the properties of the surrounding environment. For example, multiple empty spaces 1023, 1025, and 1027 may be recognized within the environment being captured, as shown in (a) of FIG. 10, or an empty space may be recognized only in a narrow area 1071 below within the environment being captured, as shown in (b) of FIG. 10.

According to an embodiment, if the environment being captured through the camera image 1010 is messy with many objects and few empty spaces, a device (e.g., a handy cleaner) helpful for organization and having a small volume may be selected.

According to an embodiment, if the environment being captured is in a well-organized state with many objects and few empty spaces, an additional device (e.g., an air purifier, a water purifier, an air dresser, a smart picture frame, etc.) that is convenient and helpful for organizing the surrounding environment better or a device having a small volume may be selected.

In an embodiment, if the environment being captured is messy with few objects and many empty spaces, a device (e.g., a robot cleaner, a storage closet, etc.) that is helpful for organization and has a large volume may be selected. Alternatively, if the environment being captured is in a well-organized state with few objects and many empty spaces, an additional device that is convenient and helpful for organizing the surrounding environment better or a device having a large volume (e.g., a robot cleaner, a smart speaker, etc.) may be selected.

According to an embodiment, the electronic device may dispose the virtual IoT device in the empty space of the surrounding environment within the camera image or display it overlapping other objects. The electronic device may preferentially dispose the virtual IoT device in the empty space and, if there is only a small empty space in the surrounding environment, dispose the virtual IoT device to overlap the empty space and surrounding objects, and, if there is no empty space, dispose the IoT device to overlap other objects at an optimal location.

According to an embodiment, if there is no connectable real IoT device in the surrounding environment captured in the camera image and if a new IoT device needs to be purchased, the electronic device may recommend and display a virtual IoT device so that the user may experience it in advance. In addition, if there is no connectable real IoT device in the surrounding environment captured in the camera image and if provision of additional components enables an IoT function while being connected with the general device, the electronic device may induce the purchase of additional components for IoT execution.

According to an embodiment, if there is a connectable real IoT device in the surrounding environment captured in the camera image and if the IoT device has never been connected to the electronic device and is in an off state, the electronic device may recommend to turn on the IoT device to operate and to use the same after connection. In addition, if the IoT device has never been connected to the electronic device and is in an on state, the electronic device may recommend inducing connection so as to operate, connect, and then use the IoT device. In addition, if the IoT device has ever been connected to the electronic device and is currently in an off state, the electronic device may induce to turn on the IoT device to operate and then continuously use the same. In addition, if the IoT device has ever been connected to the electronic device and is currently in an on state, the electronic device may induce to continuously use the same and provide recommendations about other IoT devices that would be good to use together.

An electronic device according to various embodiments of the disclosure may include a display, a camera, a memory storing instructions, and a processor operatively connected to the display, the camera, and the memory.

According to an embodiment, the instructions stored in the memory, when executed by the processor, may cause the electronic device to activate the camera and display an image acquired in real time through the camera on the display, analyze the image to determine at least one space within the image, identify at least one IoT (Internet of Things) device capable of being disposed in the at least one space, and display at least one virtual IoT device corresponding to the at least one identified IoT device on the at least one determined space of the image.

According to an embodiment, the instructions may cause the electronic device to identify at least one real object included in the image through analysis of the image and identify an IoT device that is connectable with the identified real object.

According to an embodiment, the instructions may cause the electronic device to display a virtual operation state corresponding to an operation state of the IoT device during operation within the image.

According to an embodiment, the instructions may cause the electronic device to display at least one control item corresponding to the virtual IoT device and display the virtual operation state within the image, based on a user input to the control item.

According to an embodiment, the instructions may cause the electronic device to display, when displaying a plurality of virtual IoT devices, a plurality of control items corresponding to the plurality of virtual IoT devices, respectively.

According to an embodiment, the instructions may cause the electronic device to display an affordance item corresponding to the virtual IoT device and provide a purchase screen for purchasing an IoT device corresponding to the virtual IoT device, based on a user input to the affordance item.

According to an embodiment, the electronic device may further include a communication module supporting short-range wireless communication, and the instructions may cause the electronic device to recognize at least one adjacent real IoT device using the communication module and identify the recognized real IoT device from the image.

According to an embodiment, the instructions may cause the electronic device to display at least one control item corresponding to the real IoT device, and transmit a control signal instructing operation of the real IoT device, based on a user input to the control item.

According to an embodiment, the instructions may cause the electronic device to display, if a real IoT device is added to be displayed within the image due to a change in a viewpoint of the camera, a control item corresponding to the added real IoT device and remove, if a real IoT device displayed within the image is excluded therefrom due to a change in a viewpoint of the camera, a control item corresponding to the excluded real IoT device.

According to an embodiment, the instructions may cause the electronic device to identify at least one real object included in the image through analysis of the image and determine at least one IoT device capable of being disposed in the at least one space, based on at least one of a size, distribution, or density of the identified real object.

A method for providing a virtual IoT environment of an electronic device according to various embodiments of the disclosure may include activating a camera to display an image acquired in real time through the camera, analyzing the image to determine at least one space within the image, identifying at least one IoT (Internet of Things) device capable of being disposed in the at least one space, and displaying at least one virtual IoT device corresponding to the at least one identified IoT device on the at least one determined space of the image.

According to an embodiment, the method may further include displaying a virtual operation state corresponding to an operation state of the IoT device during operation within the image.

According to an embodiment, the method may further include displaying at least one control item corresponding to the virtual IoT device, and the displaying of the virtual operation state may include displaying the virtual operation state within the image, based on a user input to the control item.

According to an embodiment, the method may further include displaying an affordance item corresponding to the virtual IoT device and providing a purchase screen for purchasing an IoT device corresponding to the virtual IoT device, based on a user input to the affordance item.

According to an embodiment, the method may further include recognizing at least one adjacent real IoT device and identifying the recognized real IoT device from the image.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to, " "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a camera;
a memory configured to store instructions; and
a processor operatively connected to the display, the camera, and the memory,
wherein the instructions stored in the memory, when executed by the processor, cause the electronic device to:
activate the camera and display an image acquired in real time through the camera on the display;
analyze the image to determine at least one space within the image;
identify at least one IoT (Internet of Things) device capable of being disposed in the at least one space; and
display at least one virtual IoT device corresponding to the at least one identified IoT device on the at least one determined space of the image.

2. The electronic device of claim 1,
wherein the instructions are configured to cause the electronic device to:
identify at least one real object included in the image through analysis of the image; and
identify an IoT device that is connectable with the identified real object.

3. The electronic device of claim 1 or claim 2,
wherein the instructions are configured to cause the electronic device to
display a virtual operation state corresponding to an operation state of the IoT device during operation within the image.

4. The electronic device of any one of claims 1 to 3,
wherein the instructions are configured to cause the electronic device to:
display at least one control item corresponding to the virtual IoT device; and
display the virtual operation state within the image, based on a user input to the control item.

5. The electronic device of claim 4,
wherein the instructions are configured to cause the electronic device to
display, when displaying a plurality of virtual IoT devices, a plurality of control items corresponding to the plurality of virtual IoT devices, respectively.

6. The electronic device of any one of claims 1 to 5,
wherein the instructions are configured to cause the electronic device to:
display an affordance item corresponding to the virtual IoT device; and
provide a purchase screen for purchasing an IoT device corresponding to the virtual IoT device, based on a user input to the affordance item.

7. The electronic device of any one of claims 1 to 6,
further comprising a communication module supporting short-range wireless communication,
wherein the instructions are configured to cause the electronic device to:
recognize at least one adjacent real IoT device using the communication module; and
identify the recognized real IoT device from the image.

8. The electronic device of any one of claims 1 to 7,
wherein the instructions are configured to cause the electronic device to:
display at least one control item corresponding to the real IoT device; and
transmit a control signal instructing operation of the real IoT device, based on a user input to the control item.

9. The electronic device of claim 8,
wherein the instructions are configured to cause the electronic device to:
display, in case that a real IoT device is added to be displayed within the image due to a change in a viewpoint of the camera, a control item corresponding to the added real IoT device; and
remove, in case that a real IoT device displayed within the image is excluded therefrom due to a change in a viewpoint of the camera, a control item corresponding to the excluded real IoT device.

10. The electronic device of claim 9,
wherein the instructions are configured to cause the electronic device to:
identify at least one real object included in the image through analysis of the image; and
determine at least one IoT device capable of being disposed in the at least one space, based on at least one of a size, distribution, or density of the identified real object.

11. A method for providing a virtual IoT environment of an electronic device, the method comprising:
activating a camera to display an image acquired in real time through the camera;
analyzing the image to determine at least one space within the image;
identifying at least one IoT (Internet of Things) device capable of being disposed in the at least one space; and
displaying at least one virtual IoT device corresponding to the at least one identified IoT device on the at least one determined space of the image.

12. The method of claim 11,
further comprising displaying a virtual operation state corresponding to an operation state of the IoT device during operation within the image.

13. The method of claim 12,
further comprising displaying at least one control item corresponding to the virtual IoT device,
wherein the displaying of the virtual operation state comprises displaying the virtual operation state within the image, based on a user input to the control item.

14. The method of any one of claims 11 to 13, further comprising:
displaying an affordance item corresponding to the virtual IoT device; and
providing a purchase screen for purchasing an IoT device corresponding to the virtual IoT device, based on a user input to the affordance item.

15. The method of any one of claims 11 to 14, further comprising:
recognizing at least one adjacent real IoT device; and
identifying the recognized real IoT device from the image.
